# EUROPEAN PATENT APPLICATION

(11) **EP 4 425 590 A1**
(43) Date of publication of application: **04.09.2024**
(21) Application number: 23777630.7
(22) Date of filing: 06.02.2023
(51) Int. Cl.: H01M 4/04, H01M 10/0587, H01M 10/05

(54) **ELECTRODE ASSEMBLY, BATTERY CELL, BATTERY, AND POWER CONSUMING DEVICE**

(30) Priority: 28.03.2022 CN 202210311856
(71) Applicant: Contemporary Amperex Technology Co., Limited, Ningde, Fujian 352100 (CN)
(72) Inventor: XU, Hu, Ningde, Fujian 352100 (CN); JIN, Haizu, Ningde, Fujian 352100 (CN)
(74) Representative: Ran, Handong
(86) International application number: PCT/CN2023/074509
(87) International publication number: WO 2023/185251

(57) **Abstract**

An electrode assembly, a battery cell, a battery, and a power consuming device. The electrode assembly comprises a first electrode plate (10A), a second electrode plate (10B), and a separator (10C), which is arranged between the first electrode plate (10A) and the second electrode plate (10B), wherein the first electrode plate (10A), the separator (10C), and the second electrode plate (10B) are wound in a winding direction to form a wound structure (100; 100'); a first surface on the side of at least one of the first electrode plate (10A) and the second electrode plate (10B) adjacent to the separator (10C) comprises a first surface area (21), a second surface area (22) and a third surface area (23), which are divided in the winding direction; and the second surface area (22) is provided with a plurality of second protrusion structures (32) distributed discretely, the first surface area (21) has no protrusion structures or has a plurality of first protrusion structures (31) distributed discretely, the third surface area (23) has no protrusion structures or has a plurality of third protrusion structures (33) distributed discretely, and the protrusion height h1 of the plurality of first protrusion structures (31) and/or the protrusion height h3 of the plurality of third protrusion structures (33) are/is lower than the protrusion height h2 of the plurality of second protrusion structures (32).

## Description

### CROSS-REFERENCE TO RELATED APPLICATIONS

This application claims priority to Chinese Patent Application No. 202210311856.5, filed on March 28, 2022, which is incorporated herein by reference in its entirety.

### TECHNICAL FIELD

This disclosure relates to the field of battery technologies, and in particular, to an electrode assembly, a battery cell, a battery, and an electric apparatus.

### BACKGROUND

A rechargeable battery cell may be referred to as a secondary battery cell, and is a battery cell that can be charged after being discharged to activate active substances for continuous use. Rechargeable battery cells are widely used in electronic devices, such as mobile phones, notebook computers, battery motorcycles, electric vehicles, electric airplanes, electric ships, electric toy cars, electric toy ships, electric toy airplanes, and electric tools.

As a key component of a battery cell, an electrode assembly may be formed by winding positive and negative electrode plates. A wound electrode assembly has problems such as lithium precipitation or poor electrolyte infiltration, which affect the safety performance or cycling performance.

### SUMMARY

According to an aspect of this disclosure, an electrode assembly is provided, including a first electrode plate, a second electrode plate, and a separator provided between the first electrode plate and the second electrode plate, where the first electrode plate, the separator, and the second electrode plate are wound in a winding direction to form a wound structure. At least one first surface of the first electrode plate and second electrode plate at a side closer to the separator includes a first surface region, a second surface region, and a third surface region divided along the winding direction. The first surface region, the second surface region, and the third surface region each have a length greater than 0 in the winding direction. The second surface region has a plurality of second protrusion structures distributed discretely, the first surface region has no protrusion structure or a plurality of first protrusion structures distributed discretely, the third surface region has no protrusion structure or a plurality of third protrusion structures distributed discretely, and a protrusion height h1 of the plurality of first protrusion structures and/or a protrusion height h3 of the plurality of third protrusion structures is less than or greater than a protrusion height h2 of the plurality of second protrusion structures.

In this embodiment, the electrode plate swells during use of a battery. The protrusion structures discretely distributed on the side of the electrode plate closer to the separator support the separator, forming a buffer gap between the electrode plate and the separator. This buffer gap provides space for the swelling of the electrode plate, avoiding lithium precipitation caused by a large-area close contact between the electrode plate and the separator when the electrode plate swells. Additionally, the buffer gap between the protrusion structures and the separator retains the electrolyte to guarantee the infiltration effect of the electrolyte within the wound structure, facilitating full reaction with the active substance on the electrode plate during the charge and discharge processes of the battery, thereby optimizing the cycling performance of the battery.

In terms of distribution of protrusion structures, the second surface region among the first surface region, the second surface region, and the third surface region divided along the winding direction is provided with the second protrusion structures, and the first surface region and the third surface region are not provided with the protrusion structure or are provided with protrusion structures with the protrusion height less than or greater than the protrusion height of the second protrusion structures, thus implementing stronger adaptability to the stress on different regions after the winding of the wound structure. Higher protrusion structures provide sufficient swelling space and pathways for electrolyte infiltration and absorption in regions with greater swelling forces. Conversely, in regions with smaller swelling forces, no protrusion structure is provided or lower protrusion structures are provided to simplify processing or reduce processing difficulty, or minimize processing of the electrode plate to guarantee strength and rigidity performance of the electrode plate.

In some embodiments, the protrusion height h1 of the plurality of first protrusion structures and the protrusion height h3 of the plurality of third protrusion structures are both less than or greater than the protrusion height h2 of the plurality of second protrusion structures.

In the wound structure (such as the hollow cylindrical structure) of some batteries, the swelling forces of the first surface region and the third surface region on the inner side and outer side of the electrode plate respectively in the winding direction are both lower than the swelling force of the second surface region in the middle. Therefore, with the protrusion height of the first protrusion structures and the protrusion height of the third protrusion structures both set to be smaller than the protrusion height of the second protrusion structures, the influence of the processing processes of the electrode plate, for which protrusion structures are implemented in the first surface region and the third surface region, on the strength or rigidity of the electrode plate itself can be reduced. In the wound structure of some other batteries, the swelling forces of the first surface region and the third surface region on the inner side and the outer side of the electrode plate respectively in the winding direction are both higher than the swelling force of the second surface region in the middle. Therefore, with the protrusion height of the first protrusion structures and the protrusion height of the third protrusion structures both set to be greater than the protrusion height of the second protrusion structure, the influence of the processing processes of the electrode plate, for which protrusion structures are implemented in the second surface region, on the strength or rigidity of the electrode plate itself can be reduced.

In some embodiments, the protrusion height h1 of the plurality of first protrusion structures and the protrusion height h3 of the plurality of third protrusion structures are basically equal.

With the heights of the first protrusion structures and the third protrusion structures basically equal, the first protrusion structures and the third protrusion structures can be implemented through the same processing procedure according to basically the same processing parameters when the electrode plate is processed, reducing the number of processing steps and the processing difficulty.

In some embodiments, the protrusion height h1 of the plurality of first protrusion structures is greater than the protrusion height h3 of the plurality of third protrusion structures.

In the wound structure of some batteries, the swelling force of the first surface region on the inner side of the electrode plate in the winding direction when the electrode plate swells is greater than the swelling force of the second surface region on the outer side when the electrode plate swells. With the protrusion height of the first protrusion structures set to be greater than the protrusion height of the third protrusion structures, the actual swelling force in each region can be adapted to the protrusion height of the protrusion structures provided in this region, thus further improving the battery performance.

In some embodiments, the protrusion height h1 of the plurality of first protrusion structures is less than the protrusion height h3 of the plurality of third protrusion structures.

In the wound structure of some batteries, the swelling force of the first surface region on the inner side of the electrode plate in the winding direction when the electrode plate swells is less than the swelling force of the second surface region on the outer side when the electrode plate swells. With the protrusion height of the first protrusion structures set to be less than the protrusion height of the third protrusion structures, the actual swelling force in each region can be adapted to the protrusion height of the protrusion structures provided in this region, thus further improving the battery performance.

In some embodiments, the protrusion height h1 of the plurality of first protrusion structures is greater than the protrusion height h2 of the plurality of second protrusion structures, and the protrusion height h3 of the plurality of third protrusion structures is less than the protrusion height h2 of the plurality of second protrusion structures.

The wound structure (such as the prismatic structure) of some batteries needs to be flattened after winding. However, after the wound structure is flattened, there will be a concentration of swelling force in the first surface region on the inner side of the electrode plate in the winding direction when the electrode plate swells, while the swelling force of the third surface region at the outer side is relatively smaller compared to the swelling force of both the first surface region and the second surface region. Therefore, with the protrusion height of the first protrusion structures being made greater than the protrusion height of the second protrusion structures and the protrusion height of the third protrusion structures being made smaller than the protrusion height of the second protrusion structures, sufficient buffer space can be provided for the swelling forces in different regions, reducing lithium precipitation and improving the infiltration effect of the electrolyte.

In some embodiments, the protrusion height h1 of the plurality of first protrusion structures is less than the protrusion height h2 of the plurality of second protrusion structures, and the protrusion height h3 of the plurality of third protrusion structures is greater than the protrusion height h2 of the plurality of second protrusion structures.

In the wound structure of some batteries, there is a concentration of swelling force in the outer region of the wound structure when the electrode plate swells, while the internal hollow region experiences relatively smaller swelling force. Therefore, with the protrusion height of the first protrusion structures being made smaller than the protrusion height of the second protrusion structures and the protrusion height of the third protrusion structures being made greater than the protrusion height of the second protrusion structures, sufficient buffer space can be provided for the swelling forces in different regions, reducing lithium precipitation and improving the infiltration effect of the electrolyte.

In some embodiments, the protrusion height h2 of the plurality of second protrusion structures gradually increases or gradually decreases along the winding direction.

For the second surface region, which is located in the middle along the winding direction of the electrode plate, different wound structures exhibit varying trends in swelling force in the surface region. For wound structures where the swelling force gradually increases from the inner to the outer part of the second surface region, gradually increasing the protrusion height h2 of the second protrusion structures along the winding direction can make the protrusion height of the second protrusion structures be adapted to the swelling force. Conversely, for wound structures where the swelling force gradually decreases from the inner to the outer part of the second surface region, gradually decreasing the protrusion height h2 of the second protrusion structures along the winding direction can make the protrusion height of the second protrusion structures be adapted to the swelling force. In this way, sufficient buffer space can be provided for the swelling forces in different regions, reducing lithium precipitation and improving the infiltration effect of the electrolyte.

In some embodiments, the protrusion height h1 of the plurality of first protrusion structures and/or the protrusion height h3 of the plurality of third protrusion structures gradually increases or gradually decreases along the winding direction.

For the first surface region and the third surface region, different wound structures exhibit varying trends in swelling force in this region. Depending on whether the swelling force gradually increases or decreases, gradually increasing or decreasing the height of the first protrusion structures and/or the height of the third protrusion structures along the winding direction can make the protrusion height of the first protrusion structures and/or the third protrusion structures be adapted to the swelling force. In this way, sufficient buffer space can be provided for the swelling forces in different regions, reducing lithium precipitation and improving the infiltration effect of the electrolyte.

In some embodiments, the range of the protrusion height h1 of the plurality of first protrusion structures, the range of the protrusion height h2 of the plurality of second protrusion structures, and/or the range of the protrusion height h3 of the plurality of third protrusion structures is less than or equal to 30 µm. The ranges of the protrusion heights being less than or equal to 30 µm can reduce the processing difficulty and lower manufacturing costs for forming protrusion structures.

In some embodiments, the range of the protrusion height h1 of the plurality of first protrusion structures, the range of the protrusion height h2 of the plurality of second protrusion structures, and/or the range of the protrusion height h3 of the plurality of third protrusion structures is less than or equal to 20 µm. The ranges of the protrusion heights being less than or equal to 20 µm can simultaneously reduce processing difficulty for forming protrusion structures and guarantee consistency in the formed swelling buffer space and pathways for electrolyte infiltration and absorption.

In some embodiments, the range of the protrusion height h1 of the plurality of first protrusion structures, the range of the protrusion height h2 of the plurality of second protrusion structures, and/or the range of the protrusion height h3 of the plurality of third protrusion structures is less than or equal to 10 µm. The ranges of the protrusion heights being less than or equal to 10 µm can increase the uniformity and consistency in the swelling buffer space and pathways for electrolyte infiltration and absorption formed by the protrusion structures, thus improving the battery performance.

In some embodiments, the wound structure is a hollow cylindrical or prismatic structure. Combining the aforementioned provision or no provision of the protrusion structures in different surface regions, as well as the relationships between protrusion heights of the protrusion structures, adaptively choosing between hollow cylindrical or prismatic structures can enhance battery performance.

In some embodiments, the first surface region is a portion of the first surface from an innermost end of the wound structure to a division position at an m-th layer of the wound structure; the second surface region is a portion of the first surface from the division position at the m-th layer of the wound structure to a division position at an n-th layer of the wound structure; and the third surface region is a portion of the first surface from the division position at the n-th layer of the wound structure to an outermost end of the wound structure, where n > m > 1.

Through the division of the electrode plate along the winding direction from the innermost end to the outermost end into three surface regions, and setting the surface region between the division position at the m-th layer and the division position at the n-th layer as the second surface region, distinct from the situation when the first surface of the electrode plate is divided into only two regions along the winding direction or is not divided at all, in conjunction with the foregoing settings of the protrusion structures, the adaptability of the wound structure is effectively increased, enhancing battery performance.

In some embodiments, a shape of the plurality of first protrusion structures and/or a shape of the plurality of third protrusion structures is different from a shape of the plurality of second protrusion structures.

Combined with the settings of the protrusion heights of the protrusion structures, the adaptability of the wound structure is further improved through the shape differences in the protrusion structures in different surface regions, improving the battery performance.

In some embodiments, the second surface region includes at least two surface region segments divided in a direction perpendicular to the winding direction, and the plurality of second protrusion structures are located in a part of the at least two surface region segments.

Through the division of the second surface region into at least two surface region segments perpendicular to the winding direction, and the provision of the second protrusion structures in a part of the surface region segments, the surface region segment(s) provided with the second protrusion structures are provided with larger swelling buffer space and electrolyte pathways. This helps to overcome local lithium precipitation in these surface region segments during battery usage due to factors such as large local swelling force or insufficient electrolyte flow.

In some embodiments, the at least two surface region segments include three surface region segments, and the plurality of second protrusion structures are all located in a surface region segment in the middle of the three surface region segments.

For some wound structures (such as the hollow cylindrical structure), the swelling force is mainly concentrated in the middle part in the direction perpendicular to the winding direction. Through the provision of the second protrusion structures in the middle surface region segment, the swelling buffer space in the middle part can be improved and the phenomenon of lithium precipitation in the middle part of the wound structure can be eliminated.

In some embodiments, the at least two surface region segments include five surface region segments, and the plurality of second protrusion structures are located in three surface region segments at two ends and in the middle among the five surface region segments.

For some wound structures (such as the hollow cylindrical structure), besides the concentration of the swelling force in the middle along the direction perpendicular to the winding direction leading to lithium precipitation, there is also lithium precipitation caused by the concentration of swelling force and insufficient electrolyte flow at corner positions. Therefore, through the provision of the second protrusion structures in three surface region segments at the two ends and in the middle among the five surface region segments, the swelling buffer space and electrolyte flow pathways at the two ends and in the middle can be improved, eliminating lithium precipitation in the middle and at the corner positions of the wound structure.

In some embodiments, at least one second surface of the first electrode plate and second electrode plate at a side farther away from the separator has a second recess portion aligned with each of at least a part of the plurality of second protrusion structures.

A protrusion structure with one side concave and the other side convex can be formed through punching or extrusion of the plate-shaped electrode plate, and the second recess portion is correspondingly present on the opposite back side of the second protrusion structure. This structure has relatively low processing difficulty, which is beneficial to large-scale centralized processing, improving processing efficiency and reducing processing costs.

In some embodiments, at least one second surface of the first electrode plate and second electrode plate at a side farther away from the separator has a first recess portion aligned with each of at least a part of the plurality of first protrusion structures and/or has a third recess portion aligned with each of at least a part of the plurality of third protrusion structures.

A protrusion structure with one side concave and the other side convex can be formed through punching or extrusion of the plate-shaped electrode plate, and the first recess portion is correspondingly present on the opposite back side of the first protrusion structure, and/or the third recess portion is correspondingly present on the opposite back side of the third protrusion structure. This structure has relatively low processing difficulty, which is beneficial to large-scale centralized processing, improving processing efficiency and reducing processing costs.

In some embodiments, each of at least a part of the plurality of second protrusion structures is a polymer particle attached to or formed on the second surface region. Through the usage of the polymer particle attached to or formed on the second surface region as the second protrusion structure, the influence of processes, like punching or extrusion, on parameters of the electrode plate, such as strength or rigidity, can be reduced.

In some embodiments, each of at least a part of the plurality of first protrusion structures is a polymer particle attached to or formed on the first surface region, and/or each of at least a part of the plurality of third protrusion structures is a polymer particle attached to or formed on the third surface region.

Through the usage of the polymer particle attached to or formed on the first surface region as the first protrusion structure and/or the usage of the polymer particle attached to or formed on the third surface region as the third protrusion structure, the influence of processes, like punching or extrusion, on parameters of the electrode plate, such as strength or rigidity, can be reduced.

According to an aspect of this disclosure, a battery cell is provided, including the foregoing electrode assembly. The battery cell with the foregoing electrode assembly has better performance.

According to an aspect of this disclosure, a battery is provided, including the foregoing battery cell. The battery with the foregoing battery cell has better performance.

According to an aspect of this disclosure, an electric apparatus is provided, including the foregoing battery. The electric apparatus with the foregoing battery has better performance.

### BRIEF DESCRIPTION OF DRAWINGS

To describe the technical solutions of the embodiments of this disclosure more clearly, the following briefly describes the accompanying drawings required for describing the embodiments of this disclosure. Apparently, the accompanying drawings described below show merely some embodiments of this disclosure, and persons of ordinary skill in the art may still derive other drawings from the accompanying drawings without creative efforts.

This disclosure can be more clearly understood from the following detailed description with reference to the accompanying drawings, where:
FIG. 1 is a schematic structural diagram of an electric apparatus according to some embodiments of this disclosure;
FIG. 2 is a schematic structural exploded view of a battery according to some embodiments of this disclosure;
FIG. 3 is a schematic structural diagram of a formed wound structure of an electrode assembly according to some embodiments of this disclosure;
FIG. 4 is a schematic structural exploded view of a battery according to some other embodiments of this disclosure;
FIG. 5 is a schematic structural diagram of a formed wound structure of an electrode assembly according to some other embodiments of this disclosure;
FIG. 6 is a schematic diagram of an electrode plate being provided with a second surface region having second protrusion structures and a first surface region and third surface region having no protrusion structure in an electrode assembly according to some embodiments of this disclosure;
FIG. 7 is a schematic diagram of an electrode plate being provided with a first surface region, a second surface region, and a third surface region having first protrusion structures, second protrusion structures, and third protrusion structures respectively in an electrode assembly according to some embodiments of this disclosure;
FIGs. 8 to 13 are schematic diagrams of protrusion heights of first protrusion structures, second protrusion structures, and third protrusion structures in an electrode assembly according to some embodiments of this disclosure;
FIG. 14 is a schematic diagram of an electrode plate being provided with a first surface region, a second surface region, and a third surface region being arranged with polymer particles in an electrode assembly according to some embodiments of this disclosure;
FIGs. 15 and 16 are schematic diagrams of an electrode plate being provided with a second surface region having second protrusion structures and a first surface region and third surface region having no protrusion structure in an electrode assembly according to some other embodiments of this disclosure; and
FIG. 17 is a schematic diagram of an electrode plate being provided with a first surface region, a second surface region, and a third surface region having first protrusion structures, second protrusion structures, and third protrusion structures respectively in an electrode assembly according to some other embodiments of this disclosure;

It should be understood that the dimensions of the various parts shown in the accompanying drawings are not drawn to scale. In addition, same or similar reference numerals denote same or similar members.

Description of reference signs:
10, 10': battery cell; 10A: first electrode plate; 10B: second electrode plate; 10C: separator; 100, 100': wound structure; 11: current collector; 12: active substance layer;
21: first surface region; 22: second surface region; 23: third surface region; 2e: outermost end of a wound structure; 2m: division position at an m-th layer of a wound structure; 2n: division position at an n-th layer of a wound structure; 2s: innermost end of a wound structure; 21a, 21b, 21c, 22a, 22b, 22c, 22d, 22e, 23a, 23b, 23c: surface region segment;
31: first protrusion structure; 32: second protrusion structure; 33: third protrusion structure; 31', 32', 33': polymer particle;
41: first recess portion; 42: second recess portion; 43: third recess portion;
50: battery; 51: box body; 52: end cover; 521: electrode terminal; and
60: vehicle.

### DESCRIPTION OF EMBODIMENTS

The following further describes the embodiments of this disclosure in detail with reference to the accompanying drawings and implementations. The detailed description and accompanying drawings of the following embodiments are used to exemplarily illustrate the principle of this disclosure, but are not intended to limit the scope of this disclosure, that is, this disclosure is not limited to the described embodiments.

In the description of this disclosure, it should be noted that, unless otherwise stated, "multiple" means at least two; and the orientations or positional relationships indicated by the terms "upper", "lower", "left", "right", "inside", "outside", and the like are merely for ease and brevity of description of this disclosure rather than indicating or implying that the means or components mentioned must have specific orientations or must be constructed or manipulated according to particular orientations. These terms shall therefore not be construed as limitations on this disclosure. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the disclosure. In the description of this disclosure, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this disclosure as appropriate to specific situations.

The following describes in detail some embodiments of the present invention with reference to the accompanying drawings. In absence of conflicts, the following features in the embodiments may be combined.

In some related technologies, electrode assemblies are formed by winding positive and negative electrode plates. The inventors have found through research that a wound electrode assembly swells during battery charging, leading to concentration of swelling force in certain parts of the wound structure. This results in a lack of gaps in these parts, causing electrolyte to be squeezed out and reducing infiltration performance. Some related technologies address this issue by providing patterns of protrusions and recesses on the electrode plates in prismatic wound structures to create gaps between the electrode plates and the separator, providing swelling buffer space. However, such wound structures lack adaptability and are difficult to apply to other forms of wound structures. Additionally, the design of patterns of protrusions and recesses does not consider the characteristics of different parts of the electrode assembly, thus failing to effectively balance battery performance and processing technologies.

In view of this, the embodiments of this disclosure provide an electrode assembly, a battery cell, a battery, and an electric apparatus, capable of enhancing battery performance and improving adaptability.

The electrode assembly in the embodiments of this disclosure can be applied to various types of battery cells. The battery cell may include a lithium-ion secondary battery, a lithium-ion primary battery, a lithium-sulfur battery, a sodium/lithium-ion battery, a sodium-ion battery, a magnesium-ion battery, or the like. This is not limited in the embodiments of this disclosure. The battery cell may be cylindrical, flat, cuboid, or of other shapes, which is not limited in the embodiments of this application either. Battery cells are typically divided into cylindrical cells, prismatic cells, and pouch cells by packaging method. The type of battery is not limited in the embodiments of this application either.

The battery cell of embodiments of this disclosure can be applied to various batteries. Batteries can be used to supply power to electric devices such as vehicles, for example, providing power for vehicle control or driving. The battery may include a housing and a battery module, where the housing provides space for accommodating the battery module, and the battery module is installed inside the housing. The housing may be made of metal material. The battery module may the multiple battery cells connected in series, parallel, or series-parallel. The battery cell is a smallest unit constituting a battery. The battery cell includes an electrode assembly capable of undergoing electrochemical reactions.

The battery of embodiments of this disclosure can be applied to various electric apparatuses using batteries. The electric apparatuses may be mobile phones, portable devices, notebook computers, electric bicycles, electric vehicles, ships, spacecrafts, electric toys, electric tools, and the like. For example, the spacecraft includes an airplane, a rocket, a space shuttle, and a spaceship; the electric toy includes a fixed or mobile electric toy, for example, a game console, an electric vehicle toy, an electric ship toy, an electric airplane toy, and the like; and the electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, an electric planer, and the like. The embodiments of the present invention impose no special limitation on the foregoing electric apparatus.

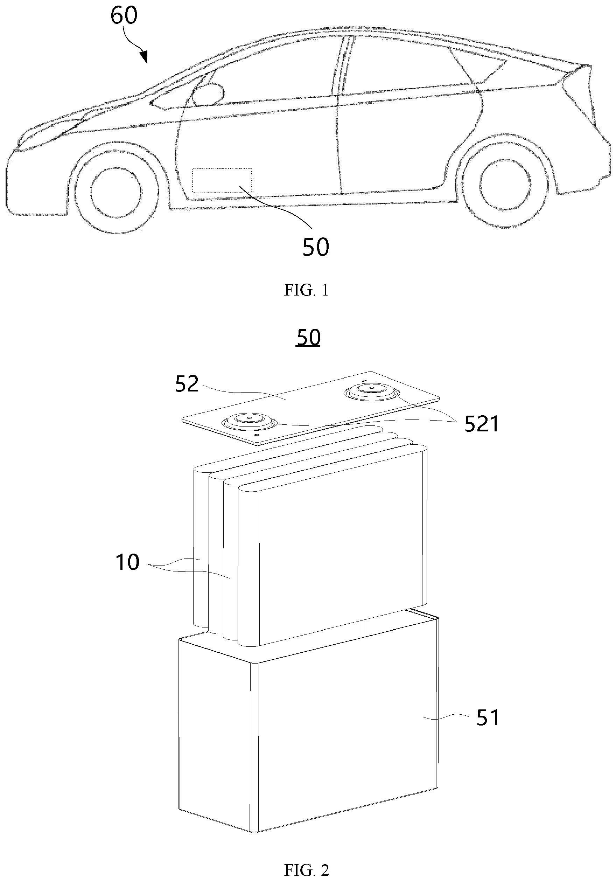

FIG. 1 is a schematic structural diagram of an electric apparatus according to some embodiments of this disclosure. For convenience, the electric apparatus being a vehicle is used as an example for description. Referring to FIG. 1, the vehicle 60 is provided with a battery 50 inside, where the battery 50 is disposed at the bottom, front, or rear of the vehicle. The battery 50 supplies power to the vehicle. For example, the battery 50 is used as an operational power source for the vehicle. The battery 50 can be used as a power supply for new energy vehicles, ships, smart electric appliances cabinets, and other apparatuses. The battery 50 can also serve as a power supply component, providing the necessary electric energy to various electric components of the apparatus.

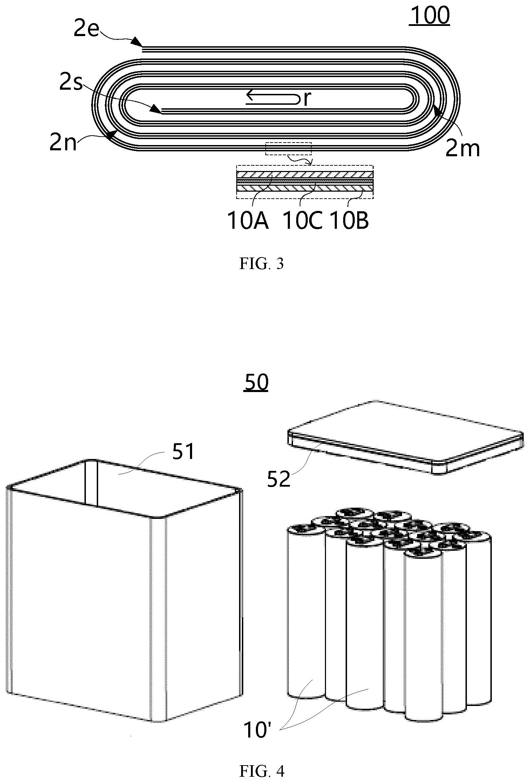

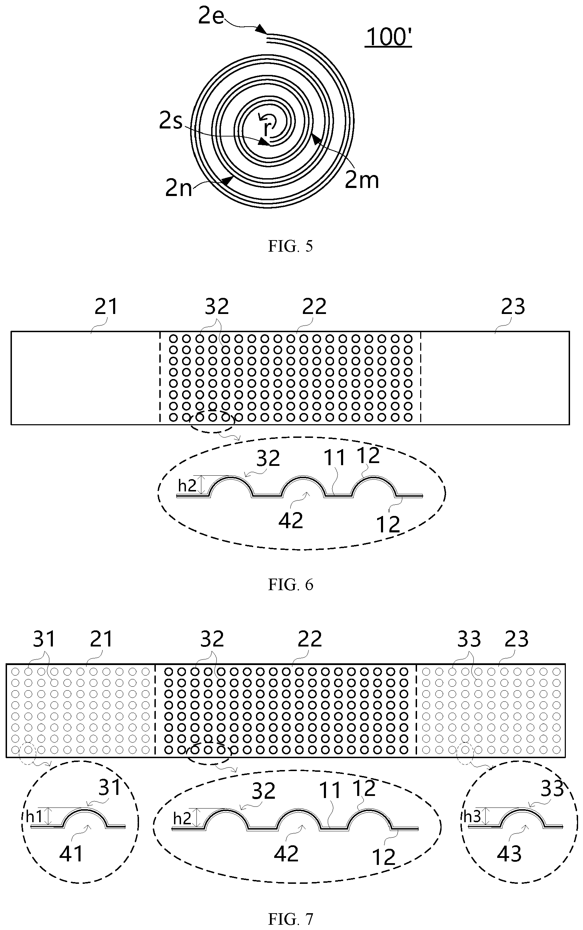

FIG. 2 is a schematic structural exploded view of a battery according to some embodiments of this disclosure. FIG. 3 is a schematic structural diagram of a formed wound structure of an electrode assembly according to some embodiments of this disclosure. FIG. 4 is a schematic structural exploded view of a battery according to some other embodiments of this disclosure. FIG. 5 is a schematic structural diagram of a formed wound structure of an electrode assembly according to some other embodiments of this disclosure.

Referring to FIGs. 2 and 4, in some embodiments, the battery 50 includes a box body 51, an end cover 52, and one or more battery cells 10 or 10' provided in the box body 51. The battery cells are electrically connected, such as in series, parallel, or series-parallel, to implement the required electric performance parameters of the battery 50. A plurality of battery cells are provided in rows, and one or more rows of battery cells may be provided in the box body as required. Electrode terminals 521 respectively electrically connected to the anode and cathode of the battery cell may be provided on the end cover 52.

In some embodiments, battery cells of the battery 50 may be arranged along at least one of the length and width directions of the box body. At least one row or one column of battery cells can be provided according to actual needs. Additionally, one or more layers of battery cells may further be provided in the height direction of the battery 50 as needed.

In some embodiments, the battery module may be first formed by connecting the plurality of battery cells in series, parallel, or series-parallel, and then a plurality of battery modules are connected in series, parallel, or series-parallel to form an entirety which is accommodated in the box body 51. In some other embodiments, all the battery cells are directly connected in series, parallel, or series-parallel to form an entirety which is then accommodated in the box body.

Referring to FIGs. 2 to 5, in some embodiments, the battery cell 10 or 10' may include a housing, an end cover, and an electrode assembly. The housing has a cavity for accommodating the electrode assembly, and the end of the housing may be constructed as open for providing an end cover assembly. The electrode assembly is installed in the cavity of the housing. In addition to the electrode assembly, the end cover, and the housing, the battery cell 10 or 10' further includes an electrolyte.

Referring to FIGs. 3 and 5, in some embodiments, an electrode assembly includes a first electrode plate 10A, a second electrode plate 10B, and a separator 10C provided between the first electrode plate 10A and the second electrode plate 10B. The first electrode plate 10A, the separator 10C, and the second electrode plate 10B are wound in a winding direction r to form a wound structure. The wound structure 100 shown in FIG. 3 is pressed into a prismatic structure after winding, which has a flat portion in the center and corner portions located on two sides of the flat portion. Accordingly, the battery cell including the electrode assembly adopts a prismatic housing structure. The wound structure 100' shown in FIG. 5 is a hollow cylindrical structure after winding. Accordingly, the battery cell including the electrode assembly adopts a cylindrical housing structure.

Working of the battery cell 10 or 10' mainly relies on migration of metal ions between the positive electrode plate and the negative electrode plate. The separator 10C may be made of PP (polypropylene, polypropylene), PE (polyethylene, polyethylene), or the like.

The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like.

The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together.

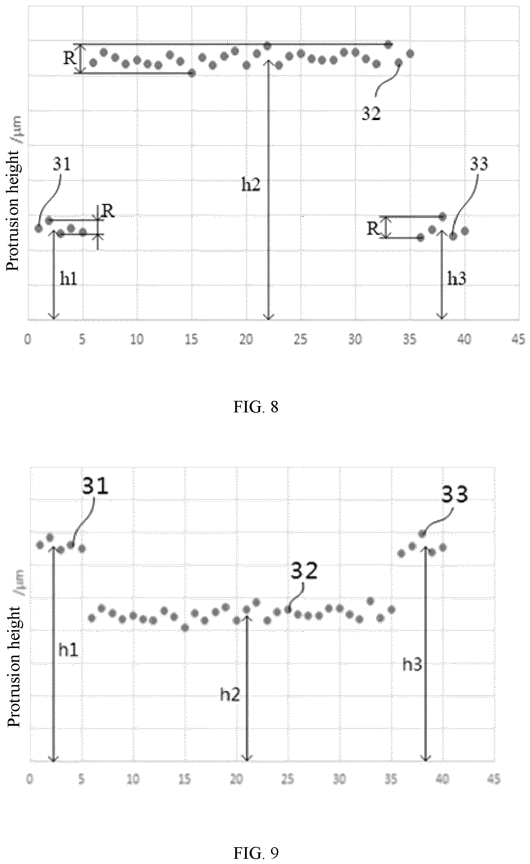

FIG. 6 is a schematic diagram of an electrode plate being provided with a second surface region having second protrusion structures and a first surface region and third surface region having no protrusion structure in an electrode assembly according to some embodiments of this disclosure. FIG. 7 is a schematic diagram of an electrode plate being provided with a first surface region, a second surface region, and a third surface region having first protrusion structures, second protrusion structures, and third protrusion structures respectively in an electrode assembly according to some embodiments of this disclosure. FIGs. 8 to 13 are schematic diagrams of protrusion heights of first protrusion structures, second protrusion structures, and third protrusion structures in an electrode assembly according to some embodiments of this disclosure.

Referring to FIGs. 6 and 7, in some embodiments, at least one first surface of the first electrode plate 10A and second electrode plate 10B at a side closer to the separator 10C includes a first surface region 21, a second surface region 22, and a third surface region 23 divided along the winding direction. The first surface region 21, the second surface region 22, and the third surface region 23 each have a length greater than 0 in the winding direction. The second surface region 22 has a plurality of second protrusion structures 32 distributed discretely.

Since the electrode plate swells during use of the battery, the protrusion structures discretely distributed on the side of the electrode plate closer to the separator support the separator, forming a buffer gap between the electrode plate and the separator. This buffer gap provides space for the swelling of the electrode plate, avoiding lithium precipitation caused by a large-area close contact between the electrode plate and the separator when the electrode plate swells. Additionally, the buffer gap between the protrusion structures and the separator retains the electrolyte to guarantee the infiltration effect of the electrolyte within the wound structure, facilitating full reaction with the active substance on the electrode plate during the charge and discharge processes of the battery, thereby optimizing the cycling performance of the battery.

Referring to FIG. 6, in some embodiments, neither the first surface region 21 nor the third surface region 23 has a protrusion structure. In this way, stronger adaptability to the stress on different regions after the winding of the wound structure is implemented. Higher protrusion structures provide sufficient swelling space and pathways for electrolyte infiltration and absorption in regions with greater swelling forces. Conversely, in regions with smaller swelling forces, no protrusion structure is provided to simplify processing or reduce processing difficulty, or minimize processing of the electrode plate to guarantee strength and rigidity performance of the electrode plate.

Referring to FIG. 7, in some embodiments, the first surface region 21 has a plurality of first protrusion structures 31 distributed discretely, and the third surface region 23 has a plurality of third protrusion structures 33 distributed discretely. In some other embodiments, one of the first surface region 21 and the third surface region 23 is not provided with protrusion structures, and the other is provided with protrusion structures. The protrusion structures can support the separator, forming a buffer gap between the electrode plate and the separator. This buffer gap provides space for the swelling of the electrode plate, avoiding lithium precipitation caused by a large-area close contact between the electrode plate and the separator when the electrode plate swells. Additionally, the buffer gap between the protrusion structures and the separator retains the electrolyte to guarantee the infiltration effect of the electrolyte within the wound structure, facilitating full reaction with the active substance on the electrode plate during the charge and discharge processes of the battery, thereby optimizing the cycling performance of the battery.

In addition, in FIGs. 6 and 7, the electrode plate includes a current collector substrate 11 and an active substance layer 12 provided on one side surface or two opposite side surfaces of the current collector substrate 11. At least a part of the plurality of first protrusion structures 31, the plurality of second protrusion structures 32, and the plurality of third protrusion structures 33 may be formed by punching or extrusion of the electrode plate.

Accordingly, referring to FIG. 6, in some embodiments, at least one second surface of the first electrode plate 10A and second electrode plate 10B at a side farther away from the separator 10C has a second recess portion 42 aligned with each of at least a part of the plurality of second protrusion structures 32. A protrusion structure with one side concave and the other side convex can be formed through punching or extrusion of the plate-shaped electrode plate, and the second recess portion is correspondingly present on the opposite back side of the second protrusion structure. This structure has relatively low processing difficulty, which is beneficial to large-scale centralized processing, improving processing efficiency and reducing processing costs. In addition, the second recess portion can further retain the electrolyte, improving the infiltration performance of the electrolyte.

Referring to FIG. 7, in some embodiments, at least one second surface of the first electrode plate 10A and second electrode plate 10B at a side farther away from the separator 10C has a first recess portion 41 aligned with each of at least a part of the plurality of first protrusion structures 31 and/or has a third recess portion 43 aligned with each of at least a part of the plurality of third protrusion structures 33. A protrusion structure with one side concave and the other side convex can be formed through punching or extrusion of the plate-shaped electrode plate, and the first recess portion is correspondingly present on the opposite back side of the first protrusion structure, and/or the third recess portion is correspondingly present on the opposite back side of the third protrusion structure. This structure has relatively low processing difficulty, which is beneficial to large-scale centralized processing, improving processing efficiency and reducing processing costs. In addition, the first recess portion and the third recess portion can further retain the electrolyte, improving the infiltration performance of the electrolyte.

Referring to FIG. 8 to 13, in some embodiments, the protrusion height h1 of the plurality of first protrusion structures 31 and/or the protrusion height h3 of the plurality of third protrusion structures 33 is less than or greater than the protrusion height h2 of the plurality of second protrusion structures 32. In this way, stronger adaptability to the stress on different regions after the winding of the wound structure is implemented. Higher protrusion structures provide sufficient swelling space and pathways for electrolyte infiltration and absorption in regions with greater swelling forces. Conversely, in regions with smaller swelling forces, lower protrusion structures are provided adaptively to increase the uniformity of the swelling space, simplifying processing or reduce processing difficulty of the protrusion structures, or minimizing processing of the electrode plate to guarantee strength and rigidity performance of the electrode plate.

FIGs. 8 to 13 show protrusion heights of the first protrusion structures, the second protrusion structures, and the third protrusion structures in an electrode assembly according to some embodiments of this disclosure. In FIGs. 8 to 13, the direction from left to right corresponds to the winding direction of the electrode plate. The dots corresponding to the plurality of first protrusion structures 31, the plurality of second protrusion structures 32, and the plurality of third protrusion structures 33 arranged in the winding direction respectively represent protrusion heights h1, h2, and h3. The protrusion heights herein meet a certain range R due to the accuracy of the processing technology. According to factors such as processing difficulty and cost, and the consistency requirement of the protrusion heights, an appropriate range R can be selected. The range R is a difference between the maximum and minimum values of the protrusion height.

In some embodiments, the range of the protrusion height h1 of the plurality of first protrusion structures, the range of the protrusion height h2 of the plurality of second protrusion structures, and/or the range of the protrusion height h3 of the plurality of third protrusion structures is less than or equal to 30 µm. The ranges of the protrusion heights being less than or equal to 30 µm can reduce the processing difficulty and lower manufacturing costs for forming protrusion structures.

In some embodiments, the range of the protrusion height h1 of the plurality of first protrusion structures, the range of the protrusion height h2 of the plurality of second protrusion structures, and/or the range of the protrusion height h3 of the plurality of third protrusion structures is less than or equal to 20 µm. The ranges of the protrusion heights being less than or equal to 20 µm can simultaneously reduce processing difficulty for forming protrusion structures and guarantee consistency in the formed swelling buffer space and pathways for electrolyte infiltration and absorption.

In some embodiments, the range of the protrusion height h1 of the plurality of first protrusion structures, the range of the protrusion height h2 of the plurality of second protrusion structures, and/or the range of the protrusion height h3 of the plurality of third protrusion structures is less than or equal to 10 µm. The ranges of the protrusion heights being less than or equal to 10 µm can increase the uniformity and consistency in the swelling buffer space and pathways for electrolyte infiltration and absorption formed by the protrusion structures, thus improving the battery performance.

Referring to FIGs. 8, 10, and 11, in some embodiments, the protrusion height h1 of the plurality of first protrusion structures 31 and the protrusion height h3 of the plurality of third protrusion structures 33 are both smaller than the protrusion height h2 of the plurality of second protrusion structures 32. In the wound structure (such as the hollow cylindrical wound structure 100' shown in FIG. 5) of some batteries, since the wound structure 100' has a hollow structure, the swelling forces of the first surface region and the second surface region on the inner side and the outer side of the electrode plate respectively in the winding direction are both lower than the swelling force of the second surface region in the middle. Therefore, with the protrusion height of the first protrusion structures and the protrusion height of the third protrusion structures set to be smaller than the protrusion height of the second protrusion structures, the influence of the processing processes of the electrode plate, for which protrusion structures are implemented in the first surface region and the third surface region, on the strength or rigidity of the electrode plate itself can be reduced.

Referring to FIG 9, in some embodiments, the protrusion height h1 of the plurality of first protrusion structures 31 and the protrusion height h3 of the plurality of third protrusion structures 33 are both greater than the protrusion height h2 of the plurality of second protrusion structures 32. In the wound structure of some batteries, the swelling forces of the first surface region and the second surface region on the inner side and the outer side of the electrode plate respectively in the winding direction are both higher than the swelling force of the second surface region in the middle. Therefore, with the protrusion height of the first protrusion structures and the protrusion height of the third protrusion structures both set to be greater than the protrusion height of the second protrusion structures, the influence of the processing processes of the electrode plate, for which protrusion structures are implemented in the second surface region, on the strength or rigidity of the electrode plate itself can be reduced.

Referring to FIGs. 8 and 9, in some embodiments, the protrusion height h1 of the plurality of first protrusion structures 31 and the protrusion height h3 of the plurality of third protrusion structures 33 are basically equal. Herein, "basically equal" means that according to the design, protrusion heights h1 and h3 are equal, but due to the existence of certain ranges, the actual protrusion height h1 is approximately equal to the protrusion height h3 on the electrode plate. With the heights of the first protrusion structures and the third protrusion structures being basically equal, the first protrusion structures and the third protrusion structures can be implemented through the same processing procedure according to basically the same processing parameters when the electrode plate is processed, reducing the number of processing steps and the processing difficulty.

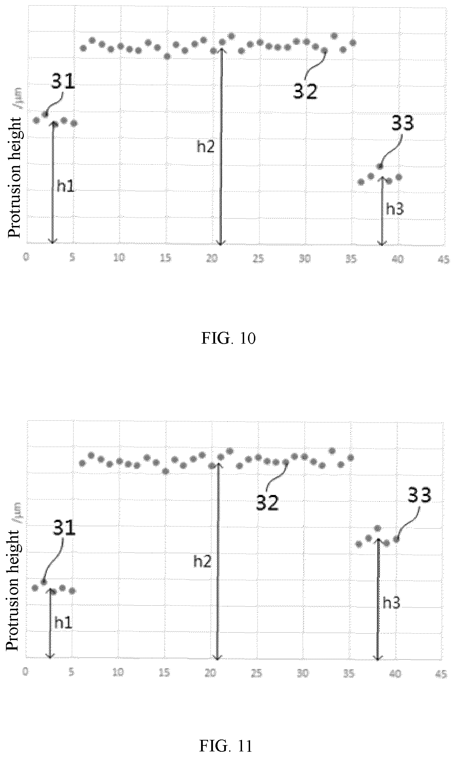

Referring to FIG. 10, in some embodiments, the protrusion height h1 of the plurality of first protrusion structures 31 is greater than the protrusion height h3 of the plurality of third protrusion structures 33. In the wound structure of some batteries, the swelling force of the first surface region on the inner side of the electrode plate in the winding direction when the electrode plate swells is greater than the swelling force of the second surface region on the outer side when the electrode plate swells. With the protrusion height of the first protrusion structures set to be greater than the protrusion height of the third protrusion structures, the actual swelling force in each region can be adapted to the protrusion height of the protrusion structures provided in this region, thus further improving the battery performance.

Referring to FIG. 11, the protrusion height h1 of the plurality of first protrusion structures 31 is less than the protrusion height h3 of the plurality of third protrusion structures 33. In the wound structure of some batteries, the swelling force of the first surface region on the inner side of the electrode plate in the winding direction when the electrode plate swells is less than the swelling force of the second surface region on the outer side when the electrode plate swells. With the protrusion height of the first protrusion structures set to be less than the protrusion height of the third protrusion structures, the actual swelling force in each region can be adapted to the protrusion height of the protrusion structures provided in this region, thus further improving the battery performance.

Referring to the relationship between the protrusion heights of the plurality of first protrusion structures 31 and the plurality of third protrusion structures 33 shown in FIGs. 10 and 11, the protrusion height h1 of the plurality of first protrusion structures 31 and the protrusion height h3 of the plurality of third protrusion structures 33 may also both be greater than the protrusion height h2 of the plurality of second protrusion structures 32.

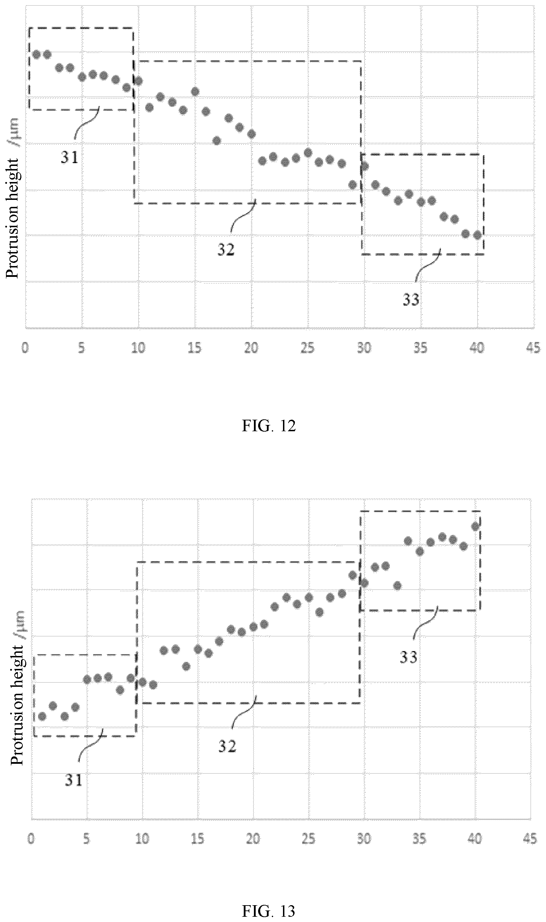

Referring to FIG. 12, in some embodiments, the protrusion height h1 of the plurality of first protrusion structures 31 is greater than the protrusion height h2 of the plurality of second protrusion structures 32, and the protrusion height h3 of the plurality of third protrusion structures 33 is less than the protrusion height h2 of the plurality of second protrusion structures 32. In this way, a structure where the height of the protrusion structures decreases gradually from the inside to the outside is implemented. The wound structure (such as the prismatic wound structure 100 shown in FIG. 3) of some batteries needs to be flattened after winding. However, after the wound structure is flattened, there will be a concentration of swelling force in the first surface region on the inner side of the electrode plate in the winding direction when the electrode plate swells, while the swelling force of the third surface region at the outer side is relatively smaller compared to the swelling force of both the first surface region and the second surface region. Therefore, with the protrusion height of the first protrusion structures being made greater than the protrusion height of the second protrusion structures and the protrusion height of the third protrusion structures being made smaller than the protrusion height of the second protrusion structures, sufficient buffer space can be provided for the swelling forces in different regions, reducing lithium precipitation and improving the infiltration effect of the electrolyte.

Referring to FIG. 13, in some embodiments, the protrusion height h1 of the plurality of first protrusion structures 31 is less than the protrusion height h2 of the plurality of second protrusion structures 32, and the protrusion height h3 of the plurality of third protrusion structures 33 is greater than the protrusion height h2 of the plurality of second protrusion structures 32. In the wound structure of some batteries, there is a concentration of swelling force in the outer region of the wound structure when the electrode plate swells, while the internal hollow region experiences relatively smaller swelling force. Therefore, with the protrusion height of the first protrusion structures being made smaller than the protrusion height of the second protrusion structures and the protrusion height of the third protrusion structures being made greater than the protrusion height of the second protrusion structures, sufficient buffer space can be provided for the swelling forces in different regions, reducing lithium precipitation and improving the infiltration effect of the electrolyte.

Referring to FIGs. 8 to 11, the protrusion heights of the plurality of protrusion structures in the surface regions may be basically equal, thereby facilitating the consistency of processing of protrusion structures in different surface regions and reducing the processing difficulty and costs. Referring to FIGs. 12 and 13, the plurality of protrusion structures of the surface regions may also vary along the winding direction. In some embodiments, the protrusion height h2 of the plurality of second protrusion structures 32 gradually increases or gradually decreases along the winding direction.

For the second surface region, which is located in the middle along the winding direction of the electrode plate, different wound structures exhibit varying trends in swelling force in the surface region. For wound structures where the swelling force gradually increases from the inner to the outer part of the second surface region, gradually increasing the protrusion height h2 of the second protrusion structures along the winding direction can make the protrusion height of the second protrusion structures be adapted to the swelling force. Conversely, for wound structures where the swelling force gradually decreases from the inner to the outer part of the second surface region, gradually decreasing the protrusion height h2 of the second protrusion structures along the winding direction can make the protrusion height of the second protrusion structures be adapted to the swelling force. In this way, sufficient buffer space can be provided for the swelling forces in different regions, reducing lithium precipitation and improving the infiltration effect of the electrolyte.

Referring to FIGs. 12 and 13, in some embodiments, the protrusion height h1 of the plurality of first protrusion structures 31 and/or the protrusion height h3 of the plurality of third protrusion structures 33 gradually increases or gradually decreases along the winding direction. For the first surface region and the third surface region, different wound structures exhibit varying trends in swelling force in this region. Depending on whether the swelling force gradually increases or decreases, gradually increasing or decreasing the height of the first protrusion structures and/or the height of the third protrusion structures along the winding direction can make the protrusion height of the first protrusion structures and/or the third protrusion structures be adapted to the swelling force. In this way, sufficient buffer space can be provided for the swelling forces in different regions, reducing lithium precipitation and improving the infiltration effect of the electrolyte.

For example, in FIG. 12, the protrusion height h1 of the plurality of first protrusion structures 31, the protrusion height h2 of the plurality of second protrusion structures 32, and the protrusion height h3 of the plurality of third protrusion structures 33 all gradually decrease along the winding direction. This design can adapt to the trend of gradually decreasing swelling force present in the surface regions of the wound structure. However, in FIG. 13, the protrusion height h1 of the plurality of first protrusion structures 31, the protrusion height h2 of the plurality of second protrusion structures 32, and the protrusion height h3 of the plurality of third protrusion structures 33 all gradually increase along the winding direction. This design can adapt to the trend of gradually increasing swelling force present in the surface regions of the wound structure.

Referring to FIGs. 3 and 5, the first surface region 21 is a portion of the first surface from an innermost end 2s of the wound structure 100 or 100' to a division position 2m at an m-th layer of the wound structure 100 or 100'; the second surface region 22 is a portion of the first surface from the division position 2m at the m-th layer of the wound structure 100 or 100' to a division position 2n at an n-th layer of the wound structure 100 or 100'; and the third surface region 23 is a portion of the first surface from the division position 2n at the n-th layer of the wound structure 100 or 100' to an outermost end 2e of the wound structure 100 or 100'. Herein, n > m > 1. In some embodiments, n and m may be positive integers.

In this way, through the division of the electrode plate along the winding direction from the innermost end to the outermost end into three surface regions, and setting the surface region between the division position at the m-th layer and the division position at the n-th layer as the second surface region, distinct from the situation when the first surface of the electrode plate is divided into only two regions along the winding direction or is not divided at all, in conjunction with the foregoing settings of the protrusion structures, the adaptability of the wound structure is effectively increased, enhancing battery performance.

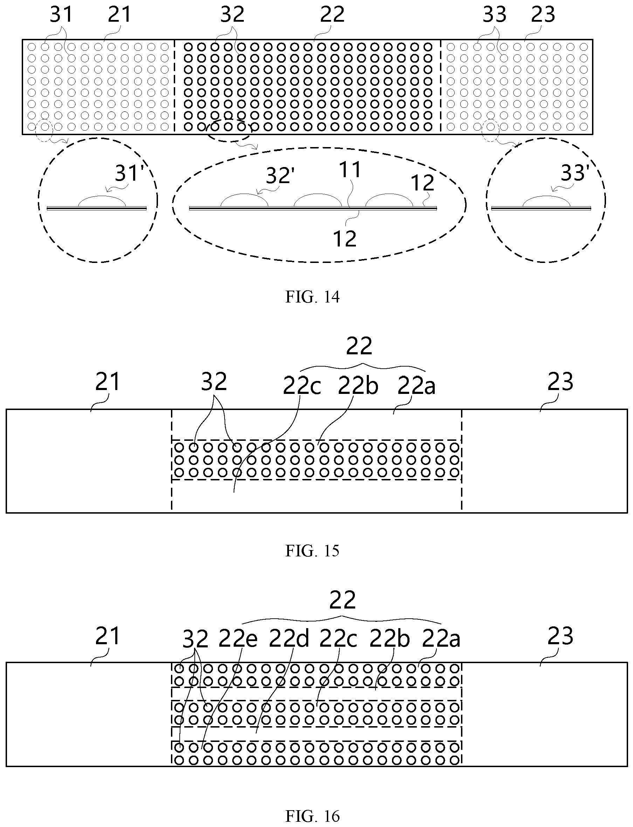

In addition to the protrusion structures shown in FIGs. 6 and 7, other forms of protrusion structures may further be adopted in some other embodiments. FIG. 14 is a schematic diagram of an electrode plate being provided with a first surface region, a second surface region, and a third surface region being arranged with polymer particles in an electrode assembly according to some embodiments of this disclosure. Referring to FIG. 14, in some embodiments, each of at least a part of the plurality of second protrusion structures 32 is a polymer particle attached to or formed on the second surface region 22. Accordingly, the surface of the electrode plate on the side far away from the separator may be configured as a plane without recess portions. Through the usage of the polymer particle attached to or formed on the second surface region as the second protrusion structure, the influence of processes, like punching or extrusion, on parameters of the electrode plate, such as strength or rigidity, can be reduced.

In FIG. 14, each of at least a part of the plurality of first protrusion structures 31 may be a polymer particle attached to or formed on the first surface region 21. However, each of at least a part of the plurality of third protrusion structures 33 may also be a polymer particle attached to or formed on the third surface region 23. Through the usage of the polymer particle attached to or formed on the first surface region as the first protrusion structure and/or the usage of the polymer particle attached to or formed on the third surface region as the third protrusion structure, the influence of processes, like punching or extrusion, on parameters of the electrode plate, such as strength or rigidity, can be reduced.

In some other embodiments, a part of the plurality of protrusion structures consists of protrusion structures with a recess portion on the back side, and another part consists of polymer particles. Alternatively, some surface regions are provided with protrusion structures with a recess portion on the back side, while other surface regions are provided with polymer particles.

Referring to FIGs. 6 and 7, in each surface region, the plurality of protrusion structures may be uniformly or randomly arranged in the whole surface region, for example, in an array form, or in an even-odd row staggered arrangement form, and the like. In some other embodiments, the plurality of protrusion structures may also be discretely distributed in only a local area in the surface region.

FIGs. 15 and 16 are schematic diagrams of an electrode plate being provided with a second surface region having second protrusion structures and a first surface region and third surface region having no protrusion structure in an electrode assembly according to some other embodiments of this disclosure. Referring to FIGs. 15 and 16, in some embodiments, the second surface region 22 includes at least two surface region segments divided in a direction perpendicular to the winding direction, and the plurality of second protrusion structures 32 are located in a part of the at least two surface region segments. Through the division of the second surface region into at least two surface region segments perpendicular to the winding direction, and the provision of the second protrusion structures in a part of the surface region segments, the surface region segment(s) provided with the second protrusion structures are provided with larger swelling buffer space and electrolyte pathways. This helps to overcome local lithium precipitation in these surface region segments during battery usage due to factors such as large local swelling force or insufficient electrolyte flow.

Referring to FIG. 15, in some embodiments, the at least two surface region segments include three surface region segments 22a, 22b, and 22c, and the plurality of second protrusion structures 32 are all located in a surface region segment 22b in the middle of the three surface region segments 22a, 22b, and 22c. For some wound structures (such as the hollow cylindrical wound structure 100' shown in FIG. 5), the swelling force is mainly concentrated in the middle part in the direction perpendicular to the winding direction. When a battery is being charged, there is a tendency for the middle region to experience apparent lithium precipitation due to the concentration of swelling forces. Through the provision of the second protrusion structures in the middle surface region segment, the swelling buffer space in the middle part can be improved and the phenomenon of lithium precipitation in the middle part of the wound structure can be eliminated.

Referring to FIG. 16, in some embodiments, the at least two surface region segments include five surface region segments 22a, 22b, 22c, 22d, and 22e, and the plurality of second protrusion structures 32 are located in three surface region segments 22a, 22c, and 22e at two ends and in the middle among the five surface region segments 22a, 22b, 22c, 22d, and 22e. For some wound structures (such as the hollow cylindrical wound structure 100' shown in FIG. 5), besides the concentration of the swelling force in the middle along the direction perpendicular to the winding direction leading to lithium precipitation, there is also lithium precipitation caused by the concentration of swelling force and insufficient electrolyte flow at corner positions. Therefore, through the provision of the second protrusion structures in three surface region segments at the two ends and in the middle among the five surface region segments, the swelling buffer space and electrolyte flow pathways at the two ends and in the middle can be improved, eliminating lithium precipitation in the middle and at the corner positions of the wound structure.

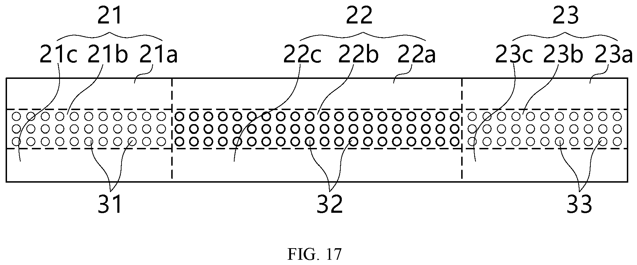

FIG. 17 is a schematic diagram of an electrode plate being provided with a first surface region, a second surface region, and a third surface region having first protrusion structures, second protrusion structures, and third protrusion structures respectively in an electrode assembly according to some other embodiments of this disclosure; Referring to FIG. 17, in some embodiments, the first surface region 21, the second surface region 22, and the third surface region 23 each include at least two surface region segments divided in a direction perpendicular to the winding direction. The plurality of first protrusion structures 31 are located in a part 21b of the at least two surface region segments 21a, 21b and 21c into which the first surface region 21 is divided, the plurality of second protrusion structures 32 are located in a part 22b of the at least two surface region segments 22a, 22b and 22c into which the second surface region 22 is divided, and the plurality of third protrusion structures 33 are located in a part 23b of the at least two surface region segments 23a, 23b and 23c into which the third surface region 23 is divided.

With each surface region divided into at least two surface region segments in a direction perpendicular to the winding direction, and protrusion structures adaptively provided in a part of the surface region segments based on the local lithium precipitation situation or swelling forces of the battery, lithium precipitation at specific locations of the wound structure can be effectively eliminated, reducing the concentration of swelling forces, and implementing a more uniform swelling buffer space and electrolyte infiltration and reflux pathways.

In the embodiments of the foregoing electrode assemblies, a shape of the plurality of first protrusion structures 31 may be different from a shape of the plurality of second protrusion structures 32, and a shape of the plurality of third protrusion structures 33 may also be different from the shape of the plurality of second protrusion structures 32. Due to the differences in the support functions provided by different protrusion structure shapes, in combination with the heights of the protrusion structures, the adaptability of the wound structure can be effectively increased, and battery performance can be improved.

The shape herein may be at least one of an outline shape, a cross-sectional shape, and a longitudinal sectional shape of the protrusion structures. For example, the cross-sectional shape of the second protrusion structures 32 is circular, and the cross-sectional shape of at least one of the first protrusion structures 31 and the third protrusion structures 33 is regular polygon. For another example, the longitudinal sectional shape of the second protrusion structures 32 is semicircular ring-shaped, and the longitudinal sectional shape of at least one of the first protrusion structures 31 and the third protrusion structures 33 is semi-elliptical ring-shaped, and the like.

Based on the various embodiments of the foregoing electrode assembly of this disclosure, embodiments of this disclosure further provide a battery cell, including the foregoing electrode assembly. The battery cell with the foregoing electrode assembly has better performance, such as safety performance or cycling performance. In some embodiments, manufacturing difficulty and manufacturing cost can also be reduced.

According to an aspect of this disclosure, a battery is provided, including the foregoing battery cell. The battery with the foregoing battery cell has better performance, such as safety performance or cycling performance. In some embodiments, manufacturing difficulty and manufacturing cost can also be reduced.

According to an aspect of this disclosure, an electric apparatus is provided, including the foregoing battery. The electric apparatus with the foregoing battery has better performance, such as safety performance or cycling performance. In some embodiments, manufacturing difficulty and manufacturing cost can also be reduced.

Although this disclosure has been described with reference to the preferred embodiments, various modifications can be made to this disclosure without departing from the scope of this disclosure and the components therein can be replaced with equivalents. In particular, as long as there is no structural conflict, the various technical features mentioned in the embodiments can be combined in any manner. This disclosure is not limited to the specific embodiments disclosed in this specification, but includes all technical solutions falling within the scope of the claims.

## Claims

1. An electrode assembly, comprising a first electrode plate (10A), a second electrode plate (10B), and a separator (10C) provided between the first electrode plate (10A) and the second electrode plate (10B), wherein the first electrode plate (10A), the separator (10C), and the second electrode plate (10B) are wound in a winding direction to form a wound structure (100; 100');
wherein at least one first surface of the first electrode plate (10A) and second electrode plate (10B) at a side closer to the separator (10C) comprises a first surface region (21), a second surface region (22), and a third surface region (23) divided along the winding direction, wherein the first surface region (21), the second surface region (22), and the third surface region (23) each have a length greater than 0 in the winding direction, the second surface region (22) has a plurality of second protrusion structures (32) distributed discretely, the first surface region (21) has no protrusion structure or a plurality of first protrusion structures (31) distributed discretely, the third surface region (23) has no protrusion structure or a plurality of third protrusion structures (33) distributed discretely, and a protrusion height h1 of the plurality of first protrusion structures (31) and/or a protrusion height h3 of the plurality of third protrusion structures (33) is less than or greater than a protrusion height h2 of the plurality of second protrusion structures (32).

2. The electrode assembly according to claim 1, wherein the protrusion height h1 of the plurality of first protrusion structures (31) and the protrusion height h3 of the plurality of third protrusion structures (33) are both less than or greater than the protrusion height h2 of the plurality of second protrusion structures (32).

3. The electrode assembly according to claim 2, wherein the protrusion height h1 of the plurality of first protrusion structures (31) and the protrusion height h3 of the plurality of third protrusion structures (33) are basically equal.

4. The electrode assembly according to claim 2, wherein the protrusion height h1 of the plurality of first protrusion structures (31) is greater than the protrusion height h3 of the plurality of third protrusion structures (33).

5. The electrode assembly according to claim 2, wherein the protrusion height h1 of the plurality of first protrusion structures (31) is less than the protrusion height h3 of the plurality of third protrusion structures (33).

6. The electrode assembly according to claim 1, wherein the protrusion height h1 of the plurality of first protrusion structures (31) is greater than the protrusion height h2 of the plurality of second protrusion structures (32), and the protrusion height h3 of the plurality of third protrusion structures (33) is less than the protrusion height h2 of the plurality of second protrusion structures (32).

7. The electrode assembly according to claim 1, wherein the protrusion height h1 of the plurality of first protrusion structures (31) is less than the protrusion height h2 of the plurality of second protrusion structures (32), and the protrusion height h3 of the plurality of third protrusion structures (33) is greater than the protrusion height h2 of the plurality of second protrusion structures (32).

8. The electrode assembly according to any one of claims 1 to 7, wherein the protrusion height h2 of the plurality of second protrusion structures (32) gradually increases or gradually decreases along the winding direction.

9. The electrode assembly according to any one of claims 1 to 8, wherein the protrusion height h1 of the plurality of first protrusion structures (31) and/or the protrusion height h3 of the plurality of third protrusion structures (33) gradually increases or gradually decreases along the winding direction.

10. The electrode assembly according to any one of claims 1 to 9, wherein a range of the protrusion height h1 of the plurality of first protrusion structures (31), a range of the protrusion height h2 of the plurality of second protrusion structures (32), and/or a range of the protrusion height h3 of the plurality of third protrusion structures (33) is less than or equal to 30 µm.

11. The electrode assembly according to claim 10, wherein the range of the protrusion height h1 of the plurality of first protrusion structures (31), the range of the protrusion height h2 of the plurality of second protrusion structures (32), and/or the range of the protrusion height h3 of the plurality of third protrusion structures (33) is less than or equal to 20 µm.

12. The electrode assembly according to claim 11, wherein the range of the protrusion height h1 of the plurality of first protrusion structures (31), the range of the protrusion height h2 of the plurality of second protrusion structures (32), and/or the range of the protrusion height h3 of the plurality of third protrusion structures (33) is less than or equal to 10 µm.

13. The electrode assembly according to any one of claims 1 to 12, wherein the wound structure (100; 100') is a hollow cylindrical or prismatic structure.

14. The electrode assembly according to any one of claims 1 to 13, wherein the first surface region (21) is a portion of the first surface from an innermost end of the wound structure (100; 100') to a division position at an m-th layer of the wound structure (100; 100'); the second surface region (22) is a portion of the first surface from the division position at the m-th layer of the wound structure (100; 100') to a division position at an n-th layer of the wound structure (100; 100'); and the third surface region (23) is a portion of the first surface from the division position at the n-th layer of the wound structure (100, 100') to an outermost end of the wound structure (100; 100'), wherein n > m > 1.

15. The electrode assembly according to any one of claims 1 to 14, wherein a shape of the plurality of first protrusion structures (31) and/or a shape of the plurality of third protrusion structures (33) is different from a shape of the plurality of second protrusion structures (32).

16. The electrode assembly according to any one of claims 1 to 15, wherein the second surface region (22) comprises at least two surface region segments divided in a direction perpendicular to the winding direction, and the plurality of second protrusion structures (32) are located in a part of the at least two surface region segments.

17. The electrode assembly according to claim 16, wherein the at least two surface region segments comprise three surface region segments, and the plurality of second protrusion structures (32) are all located in a surface region segment in the middle of the three surface region segments.

18. The electrode assembly according to claim 16, wherein the at least two surface region segments comprise five surface region segments, and the plurality of second protrusion structures (32) are located in three surface region segments at two ends and in the middle among the five surface region segments.

19. The electrode assembly according to any one of claims 1 to 18, wherein at least one second surface of the first electrode plate (10A) and second electrode plate (10B) at a side farther away from the separator (10C) has a second recess portion (42) aligned with each of at least a part of the plurality of second protrusion structures (32).

20. The electrode assembly according to any one of claims 1 to 19, wherein at least one second surface of the first electrode plate (10A) and second electrode plate (10B) at a side farther away from the separator (10C) has a first recess portion (41) aligned with each of at least a part of the plurality of first protrusion structures (31) and/or has a third recess portion (43) aligned with each of at least a part of the plurality of third protrusion structures (33).

21. The electrode assembly according to any one of claims 1 to 20, wherein each of at least a part of the plurality of second protrusion structures (32) is a polymer particle attached to or formed on the second surface region (22).

22. The electrode assembly according to any one of claims 1 to 21, wherein each of at least a part of the plurality of first protrusion structures (31) is a polymer particle attached to or formed on the first surface region (21), and/or each of at least a part of the plurality of third protrusion structures (33) is a polymer particle attached to or formed on the third surface region (23).

23. A battery cell, comprising the electrode assembly according to any one of claims 1 to 22.

24. A battery, comprising the battery cell according to claim 23.

25. An electric apparatus, comprising the battery according to claim 24.
